# EUROPEAN PATENT SPECIFICATION

(11) **EP 3 572 966 B1**
(45) Date of publication and mention of the grant of the patent: **24.11.2021**
(21) Application number: 18742135.9
(22) Date of filing: 05.01.2018
(51) Int. Cl.: H04L 9/32, G06F 21/64

(54) **BLOCKCHAIN MANAGEMENT METHOD, BLOCKCHAIN MANAGEMENT PROGRAM, BLOCKCHAIN MANAGEMENT DEVICE, AND BLOCKCHAIN MANAGEMENT SYSTEM**
VERFAHREN ZUR BLOCKCHAIN-VERWALTUNG, PROGRAMM ZUR BLOCKCHAIN-VERWALTUNG, VORRICHTUNG ZUR BLOCKCHAIN-VERWALTUNG UND SYSTEM ZUR BLOCKCHAIN-VERWALTUNG
PROCÉDÉ DE GESTION DE CHAÎNE DE BLOCS, PROGRAMME DE GESTION DE CHAÎNE DE BLOCS, DISPOSITIF DE GESTION DE CHAÎNE DE BLOCS ET SYSTÈME DE GESTION DE CHAÎNE DE BLOCS

(30) Priority: 18.01.2017 JP 2017007089
(43) Date of publication of application: 27.11.2019
(73) Proprietor: Fujitsu Limited, Kawasaki-shi, Kanagawa 211-8588 (JP)
(72) Inventor: SHIMA,Tsunekazu, Kanazawa-shi, Ishikawa 921-8025 (JP); KOGURE, Jun, Kawasaki-shi Kanagawa 211-8588 (JP)
(74) Representative: Haseltine Lake Kempner LLP
(86) International application number: PCT/JP2018/000122
(87) International publication number: WO 2018/135328

(56) References cited:
- JP-A- 2008 305 035
- US-A1- 2008 307 230
- US-A1- 2016 358 135
- US-A1- 2016 358 135

## Description

### Technical Field

The present disclosure relates to a blockchain management method, a blockchain management program, a blockchain management device, and a blockchain management system.

### Background Art

A technology called a blockchain is known (see, for example, PTL 1). In the blockchain, a plurality of blocks are arranged in time series. Each of the blocks stores a hash value (hereinafter, simply referred to as a hash) of the previous block and data related to a dealing called a transaction.

### Citation List

### Patent Literature

PTL 1: Japanese Patent No. 5858506
PTL 2: US Patent Application No. 2016/358135
PTL 3: US Patent Application No. 2008/307230

### Summary of Invention

### Technical Problem

Meanwhile, in a case where data related to privacy such as personal information and company information is included in the past data in a blockchain, it is sometimes wished to change a part of the data later in view of privacy protection.

Accordingly, in one aspect, it is an object to provide a blockchain management method, a blockchain management program, a blockchain management device, and a blockchain management system capable of determining that, when a part of data is changed, a part other than the changed part is not tampered with.

### Solution to Problem

The invention is disclosed by the independent claims. Further embodiments are described by the dependent claims.

According to one embodiment, a blockchain management method is a blockchain management method in which a process is executed by a computer, the process including: generating a first hash of data included in a partial block obtained by excluding a second area from a first block including a first area in which a data change is prohibited and the second area in which the data change is permitted; generating a second hash of data included in the first block; and adding the first hash and the second hash to a second block which is added next to the first block and includes a first area in which a data change is prohibited and a second area in which the data change is permitted.

### Advantageous Effects of Invention

When a part of data is changed, it is possible to determine that a part other than the changed part is not tampered with.

### Brief Description of Drawings

[FIG. 1] FIG. 1 is a diagram for explaining an example of a blockchain management system.
[FIG. 2] FIG. 2 is an example of a hardware configuration of a node.
[FIG. 3] FIG. 3 is an example of a functional block diagram of the node.
[FIG. 4] FIG. 4 is a diagram for explaining an example of a blockchain according to a comparative example.
[FIG. 5] FIG. 5 is a diagram for explaining an example of a blockchain according to the present embodiment.
[FIG. 6] FIG. 6 is a flowchart illustrating an example of an operation of a user.
[FIG. 7] FIG. 7 is a flowchart illustrating an example of an operation related to generation of a block performed by a miner.
[FIG. 8] FIG. 8 is a flowchart illustrating an example of a block process.
[FIG. 9] FIG. 9 is a diagram for explaining an example of generation of a new block.
[FIG. 10] FIG. 10 is a diagram for explaining an example of changing data included in a block.
[FIG. 11] FIG. 11 is a flowchart illustrating an example of an operation related to block verification and block updating performed by the miner.
[FIG. 12] FIG. 12 is a flowchart illustrating an example of a second verification process.
[FIG. 13] FIG. 13 is a diagram for explaining an example of verification of a block.
[FIG. 14] FIG. 14 is a diagram illustrating an example of a data structure of an n-th block.

### Description of Embodiments

Hereinafter, an embodiment of the present disclosure will be described with reference to the drawings.

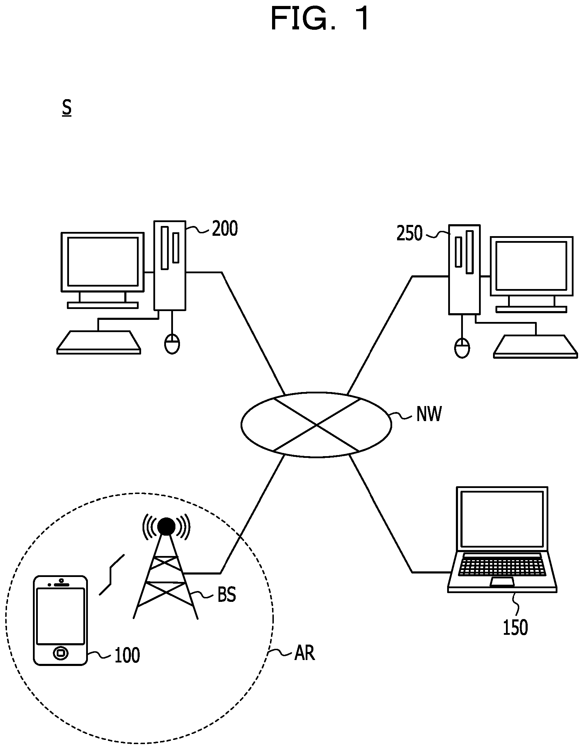

FIG. 1 is a diagram for explaining an example of a blockchain management system S. The blockchain management system S includes a plurality of nodes 100, 150, 200, and 250, all of which serve as terminal devices. In FIG. 1, a smartphone is illustrated as an example of the node 100. A laptop personal computer (PC) is illustrated as an example of the node 150. Note that the nodes 100 and 150 are not limited to the smartphone or the PC, and may be, for example, a tablet terminal or a wearable terminal. The wearable terminal is, for example, a smart watch or the like. On the other hand, a desktop PC and a server are illustrated as examples of the nodes 200 and 250.

The nodes 100, 150, 200, and 250 are connected to one another via a communication network NW. Specifically, the nodes 100, 150, 200, and 250 are coupled to one another using a so-called peer-to-peer (P2P) network. The communication network NW is, for example, a wired network such as a local area network (LAN) or the Internet. In addition, wireless communication may be used for a part of the communication between the nodes 100, 150, 200, and 250. For example, as illustrated in FIG. 1, wireless communication may be used for communication between the node 100 and the nodes 150, 200, and 250. In this case, if the node 100 is included in a wirelessly communicable area AR, the node 100 may communicate with the nodes 150, 200, and 250 via a mobile base station BS.

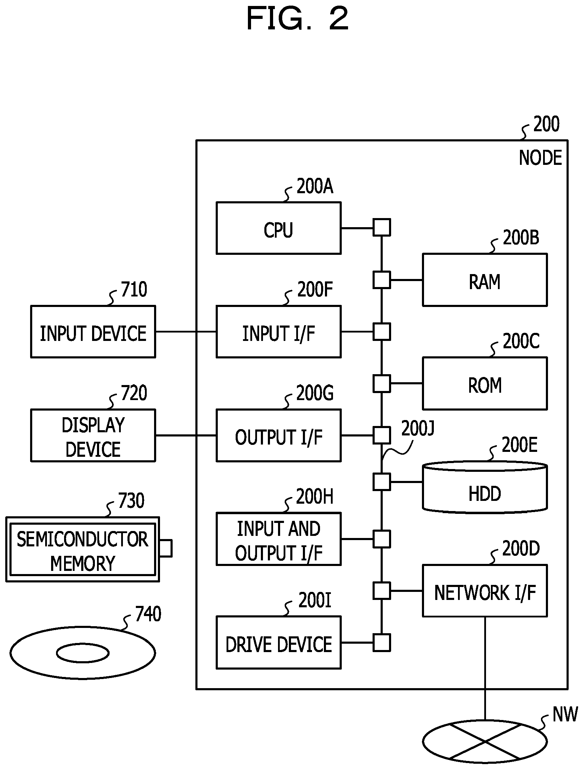

Next, a hardware configuration of the node 200 will be described with reference to FIG. 2. Since the nodes 100, 150, and 250 described above basically have the same hardware configuration as the node 200, the description thereof will be omitted.

FIG. 2 is an example of the hardware configuration of the node 200. As illustrated in FIG. 2, the node 200 includes at least a central processing unit (CPU) 200A, a random access memory (RAM) 200B, a read-only memory (ROM) 200C, and a network interface (I/F) 200D. The node 200 may include at least one of a hard disk drive (HDD) 200E, an input I/F 200F, an output I/F 200G, an input and output I/F 200H, and a drive device 2001, as required. The CPU 200A to the drive device 2001 are coupled to one another by an internal bus 200J. A computer is realized by cooperation between at least the CPU 200A and the RAM 200B.

An input device 710 is coupled to the input I/F 200F. The input device 710 is, for example, a keyboard, a mouse, or the like.

A display device 720 is coupled to the output I/F 200G. The display device 720 is, for example, a liquid crystal display.

A semiconductor memory 730 is coupled to the input and output I/F 200H. The semiconductor memory 730 is, for example, a Universal Serial Bus (USB) memory, a flash memory, or the like. The input and output I/F 200H reads a program or data stored in the semiconductor memory 730.

The input I/F 200F and the input and output I/F 200H include, for example, a USB port. The output I/F 200G includes, for example, a display port.

A portable recording medium 740 is inserted into the drive device 2001. The portable recording medium 740 is, for example, a removable disc such as a compact disc (CD)-ROM or a digital versatile disc (DVD). The drive device 2001 reads a program or data recorded on the portable recording medium 740.

The network I/F 200D includes, for example, a LAN port. The network I/F 200D is coupled to the communication network NW.

The CPU 200A stores a program stored in the ROM 200C or the HDD 200E in the RAM 200B described above. The CPU 200A stores the program recorded on the portable recording medium 740 in the RAM 200B. As a result of the CPU 200A executing the stored program, various functions to be described later are realized and various processes to be described later are executed. Note that the program may be in accordance with a flowchart to be described later.

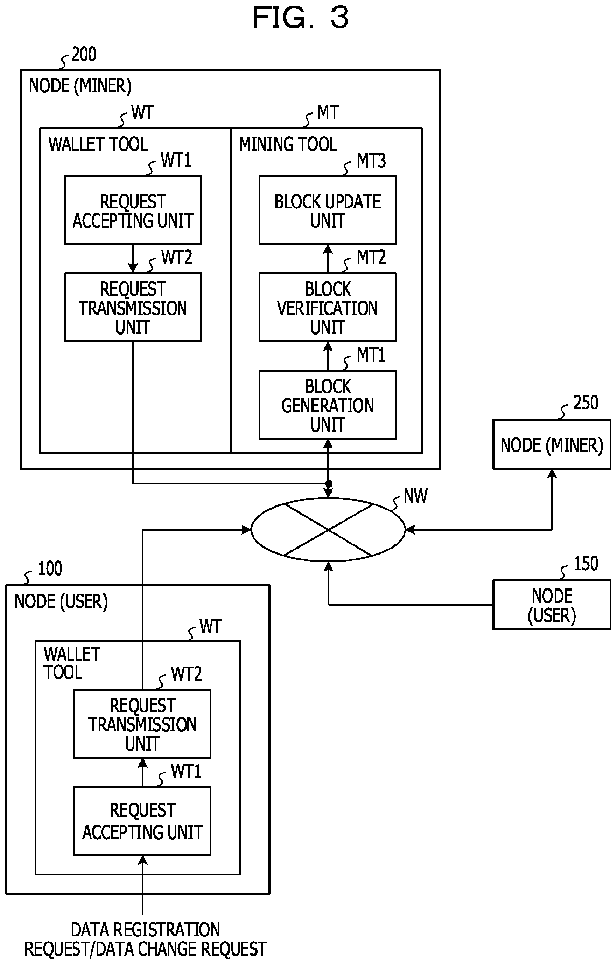

Next, each of functions of the nodes 100, 150, 200, and 250 will be described with reference to FIG. 3.

FIG. 3 is an example of a functional block diagram of the nodes 100 and 200. Since the node 150 basically has the same function as the node 100 and the node 250 basically has the same function as the node 200, the description thereof will be omitted.

As illustrated in FIG. 3, the node 100 includes a wallet tool WT, and the node 200 includes a wallet tool WT and a mining tool MT. Here, the wallet tool WT is a tool required to perform a dealing using a blockchain (specifically, bitcoin (registered trademark) or the like). On the other hand, the mining tool MT is a tool required to verify integrity and consistency of the dealing using the blockchain and to approve the dealing.

Here, the node 100 including the wallet tool WT without the mining tool MT may be called a user. Thus, in the following description, the nodes 100 and 150 will be described in other words as users 100 and 150. On the other hand, the node 200 including both of the wallet tool WT and the mining tool MT may be called a miner (an excavator). Thus, in the following description, the nodes 200 and 250 will be described in other words as miners 200 and 250.

Each of the wallet tools WT of the user 100 and the miner 200 includes a request accepting unit WT1 and a request transmission unit WT2. For example, when a data registration request is input to the user 100, the request accepting unit WT1 of the user 100 accepts the input data registration request. The data registration request is information for making a request for (requesting) registration of dealing data, and includes data to be registered. For example, when a data change request is input to the user 100, the request accepting unit WT1 of the user 100 accepts the input data change request. The data change request is information for making a request for (requesting) a change of the dealing data, and includes information specifying data to be changed and information after the change (for example, information for concealing a part related to privacy). In addition, when the request accepting unit WT1 accepts a data registration request or a data change request, the request transmission unit WT2 transmits by P2P the data registration request or the data change request accepted by the request accepting unit WT1. That is, since the P2P network is used in the present embodiment, when the request transmission unit WT2 of the user 100 transmits the data registration request or the data change request, the data registration request or the data change request is transmitted to the user 150, the miner 200, and the miner 250.

Next, the mining tool MT of the miner 200 includes a block generation unit MT1, a block verification unit MT2, and a block update unit MT3. For example, when the request transmission unit WT2 of the user 100 transmits a data registration request, the block generation unit MT1 of the miner 200 receives the data registration request. Upon receiving the data registration request, the block generation unit MT1 generates a block and stores data included in the data registration request in the block. For example, when the request transmission unit WT2 of the user 100 transmits a data change request, the block generation unit MT1 of the miner 200 receives the data change request. Upon receiving the data change request, the block generation unit MT1 changes a part of data included in a specific block among blocks managed by the blockchain, to data included in the data change request. Note that generating a block may be called mining a block.

The block verification unit MT2 verifies validity of the block generated or changed by the block generation unit MT1. More specifically, the block verification unit MT2 verifies validity of data included in the block generated or changed by the block generation unit MT1. Note that details of a verification process performed by the block verification unit MT2 will be described below.

In a case where verification by the block verification unit MT2 is positive, the block update unit MT3 adds the block to the end of the blockchain or changes the change target block managed by the blockchain to the block whose data has been changed. Note that the blockchain is distributed to and shared among the users 100 and 150 and the miners 200 and 250. The users 100 and 150 may store a part of the blockchain which they are interested in, but the miners 200 and 250 desirably store the entire blockchain. Note that, instead of such distributing and sharing, one database (DB) may centrally manage the blockchain.

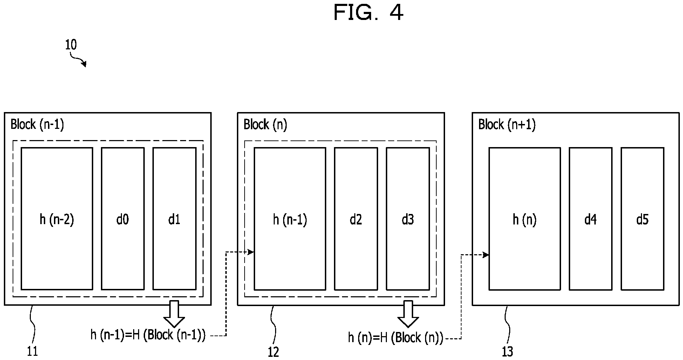

Next, a blockchain according to the present embodiment will be described in comparison with a blockchain according to a comparative example with reference to FIGs. 4, 5 and 14.

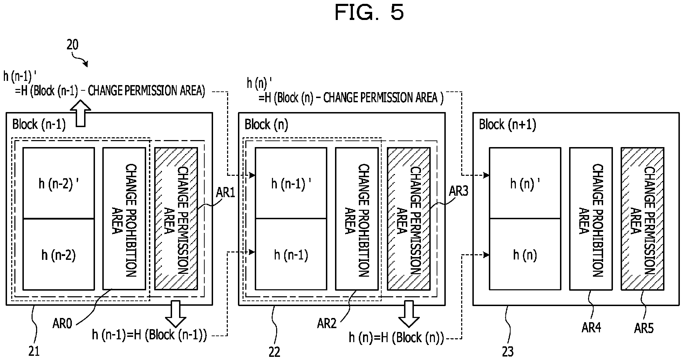

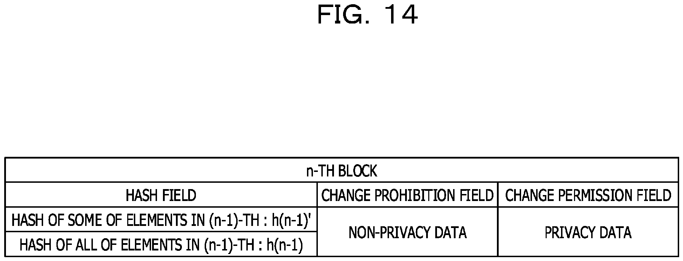

FIG. 4 is a diagram for explaining an example of a blockchain 10 according to the comparative example. FIG. 5 is a diagram for explaining an example of a blockchain 20 according to the present embodiment. FIG. 14 is a diagram illustrating an example of a data structure of an n-th block.

First, as illustrated in FIG. 4, the blockchain 10 includes an (n-1)-th block 11, an n-th block 12, and an (n+1)-th block 13. The (n-1)-th block 11 includes a hash h(n-2) of an (n-2)-th block (not illustrated) arranged immediately before, an area including data d0, and an area including data d1. Likewise, the n-th block 12 includes a hash h(n-1) of the (n-1)-th block 11 arranged immediately before, an area including data d2, and an area including data d3. The (n+1)-th block 13 includes a hash h(n) of the n-th block 12 arranged immediately before, an area including data d4, and an area including data d5. In each of the areas including the data d0 to d5, a change of the data is prohibited.

In addition, as illustrated on the lower side of the block 11, the hash h(n-1) is generated based on the hash h(n-2), the data d0, and the data d1 included in the (n-1)-th block 11, and a function H(). Likewise, the hash h(n) is generated based on the hash h(n-1), the data d2, and the data d3 included in the n-th block 12, and the function H(). The function H() is a hash function which generates a hash from elements included in a block. For example, in a case of a hash h(n), the hash h(n) is generated by using the function H() for the hash h(n-1), the data d2, and the data d3 which are all of elements of the n-th block 12. The hash h(n-1) is generated in the same manner as the hash h(n).

Here, in the blockchain 10 illustrated in FIG. 4, for example, suppose that the data d1 included in the block 11 is deleted and a hash h(n-1) is newly generated. Then, the hash h(n-1) is generated based on the hash h(n-2), the data d0, and the function H() without the data d1. On the other hand, the n-th block 12 includes the already generated hash h(n-1). When the hash h(n-1) that is generated after the data d1 is deleted is compared with the hash h(n-1) that is included in the block 12 and is generated before the data d1 is deleted, the hashes do not coincide with each other. In this way, since the two hashes h(n-1) are different from each other, it is possible to determine that there are some changes in the block 11. In other words, if the two (n-1) hashes are not different from each other, it is possible to determine that there is no change in the block 11. That is, it is possible to verify validity of the block 11.

In this way, the blockchain 10 according to the comparative example adopts a mechanism in which if data is changed, the block 11 including the changed data is detected. Therefore, even if there is an unauthorized change such as tampering with data, the block 11 including the data is easily detected. For this reason, there is almost no advantage to changing data in an unauthorized manner, and the change of the data is suppressed. However, in a case where a valid change is required to the data, it is not required to detect a block including the changed data, and this mechanism of the comparative example is not adaptable.

As illustrated in FIG. 5, the blockchain 20 according to the present embodiment includes an (n-1)-th block 21, an n-th block 22, and an (n+1)-th block 23. The (n-1)-th block 21 includes a hash h(n-2) of all of elements included in an (n-2)-th block (not illustrated) arranged immediately before, a hash h(n-2)' of some of the elements included in the (n-2)-th block, a change prohibition area AR0, and a change permission area AR1. Likewise, the n-th block 22 includes a hash h(n-1) of all of elements included in the (n-1)-th block 21 arranged immediately before, a hash h(n-1)' of some of the elements included in the (n-1)-th block 21, a change prohibition area AR2, and a change permission area AR3. The (n+1)-th block 23 includes a hash h(n) of all of elements included in the n-th block 22 arranged immediately before, a hash h(n)' of some of the elements included in the n-th block 22, a change prohibition area AR4, and a change permission area AR5.

Here, in a case of the n-th block 22, for example, all of the elements are the hash h(n-1), the hash h(n-1)', data stored in the change prohibition area AR2, and data stored in the change permission area AR3. Some of the elements are elements obtained by excluding the data stored in the change permission area AR3 from all of the elements. The (n-1)-th block 21 and the (n+1)-th block 23 are the same as the n-th block 22. Further, the change prohibition areas AR0, AR2, and AR4 described above are areas storing data, changing of which is prohibited. The change permission areas AR1, AR3, and AR5 are areas storing data, changing of which is permitted. For example, non-privacy data not related to privacy is stored in the change prohibition areas AR0, AR2, and AR4, and privacy data related to privacy is stored in the change permission areas AR1, AR3, and AR5. As an example, the n-th block 22 will be described with reference to FIG. 14. Non-privacy data is stored in a change prohibition field serving as the change prohibition area AR2, and privacy data is stored in a change permission field serving as the change permission area AR3. On the other hand, the above-described two hashes, that is, the hashes h(n-1) and h(n-1)', are stored in a hash field. The (n-1)-th block 21 and the (n+1)-th block 23 are the same as the n-th block 22. Note that the change permission areas AR1, AR3, and AR5 are respectively provided in advance in the blocks 21, 22 and 23.

The hash h(n-1) is generated based on a hash h(n-2) included in the (n-1)-th block 21, a hash h(n-2)' included in the block 21, data stored in the change prohibition area AR0, data stored in the change permission area AR1, and a function H(). That is, the hash h(n-1) is generated based on all of elements of the (n-1)-th block 21 and the function H(). On the other hand, the hash h(n-1)' is generated based on the hash h(n-2) included in the (n-1)-th block 21, the hash h(n-2)' included in the block 21, the data stored in the change prohibition area AR0, and the function H(). That is, the hash h(n-1)' is generated based on some of the elements obtained by excluding the data stored in the change permission area AR1 from all of the elements of the (n-1)-th block 21 and the function H(). Likewise, the hash h(n) is generated based on the hash h(n-1) included in the n-th block 22, the hash h(n-1)' included in the block 22, data stored in the change prohibition area AR2, data stored in the change permission area AR3, and a function H(). That is, the hash h(n) is generated based on all of elements of the n-th block 22 and the function H(). The hash h(n)' is generated based on the hash h(n-1) included in the (n-1)-th block 22, the hash h(n-1)' included in the block 22, the data stored in the change prohibition area AR2, and the function H(). That is, the hash h(n)' is generated based on some of the elements obtained by excluding the data stored in the change permission area AR3 from all of the elements of the n-th block 22 and the function H().

According to the mechanism of the present embodiment, in a case where data is not changed, it is possible to verify that the data is not changed by the same method as the comparative example. On the other hand, in a case where the data is changed by a valid change, a hash (for example, h(n-1)' or h(n)') is generated by using some of elements obtained by excluding the changed data from all of the elements of a block including the changed data. Therefore, if the hash generated by using some of the elements coincides with the corresponding hash included in the block arranged immediately after the block including the changed data, it is possible to verify that data other than the changed data is not changed. That is, even if a part of the data is changed, it is possible to secure validity of the block, and the valid blockchain is maintained.

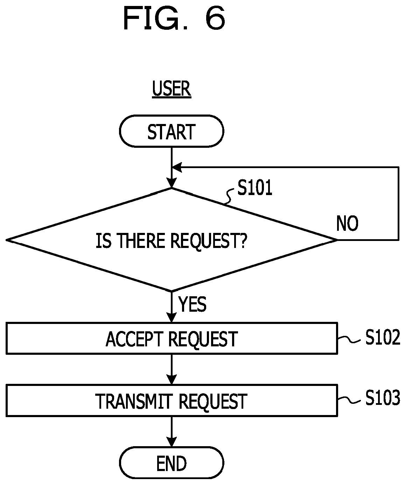

Hereinafter, details of a process using the blockchain 20 according to the present embodiment will be described with reference to FIGs. 6 to 12.

First, an operation of the user 100 will be described with reference to FIG. 6. Since an operation of the user 150 is basically the same as the operation of the user 100, the description thereof will be omitted. FIG. 6 is a flowchart illustrating an example of the operation of the user 100. First, the request accepting unit WT1 waits for a request (NO in step S101). More specifically, the request accepting unit WT1 waits until there is a data registration request or a data change request. If there is a request (YES in step S101), the request accepting unit WT1 accepts the request (step S102), and the request transmission unit WT2 transmits the request accepted by the request accepting unit WT1 to the communication network NW (step S103). After the request transmission unit WT2 transmits the request, the process ends.

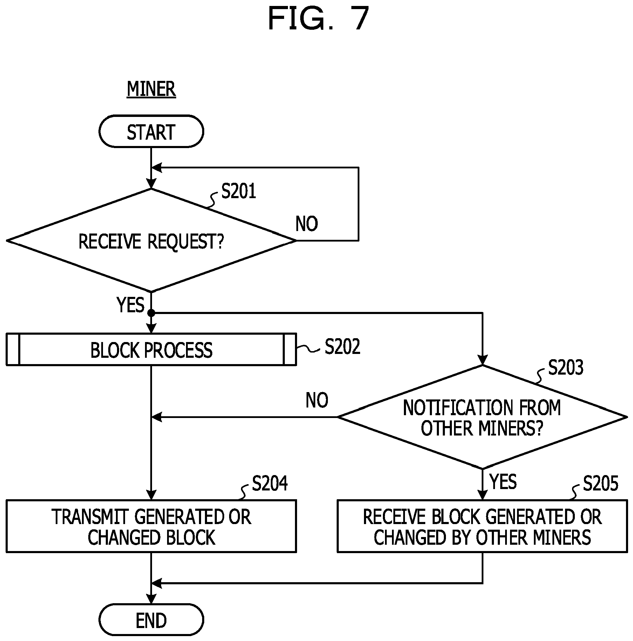

Next, an operation related to generation of a block performed by the miner 200 will be described with reference to FIG. 7. Since an operation of the miner 250 is basically the same as the operation of the miner 200, the description thereof will be omitted. FIG. 7 is a flowchart illustrating an example of the operation related to generation of a block performed by the miner 200. First, the block generation unit MT1 waits until a request is received (NO in step S201). Upon receiving a request (YES in step S201), the block generation unit MT1 executes a block process (step S202). Here, the block process is a process performed on a block according to a type of the request. Although details will be described below, in a case where the block generation unit MT1 receives a data registration request, the block generation unit MT1 generates a new block and adds data to the block. In a case where the block generation unit MT1 receives a data change request, the block generation unit MT1 changes data stored in a change permission area of a change target block to data of the data change request.

In addition, in parallel with the processing of step S202, the block generation unit MT1 monitors whether there is a predetermined notification from another miner 250 different from the miner 200 (step S203). Here, the predetermined notification means a notification indicating that the other miner 250 has generated a block or has changed a block. In the present embodiment, since the P2P network is used, the data registration request or the data change request transmitted by the request transmission unit WT2 reaches not only the miner 200 but also the miner 250. Therefore, if the miner 250 generates a block or changes a block based on the data registration request or the data change request, the miner 250 transmits the predetermined notification. Accordingly, the predetermined notification reaches the miner 200.

Here, in a case where there is no predetermined notification (NO in step S203), the block generation unit MT1 transmits the generated or changed block (step S204). More specifically, the block generation unit MT1 broadcasts the generated or changed block. Accordingly, the block generated or changed by the block generation unit MT1 reaches the users 100 and 150 and the miner 250.

On the other hand, in a case where there is a predetermined notification (YES in step S203), the block generation unit MT1 receives the block generated or changed by the miner 250 (step S205). After the processing of step S204 or step S205 is completed, the block generation unit MT1 ends the process.

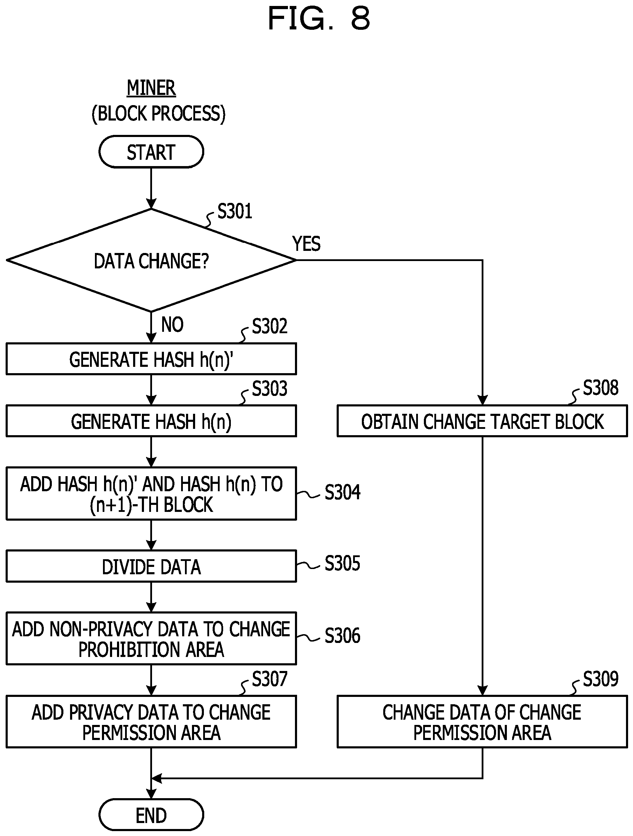

Next, the block process described above will be described with reference to FIGs. 8 to 10.

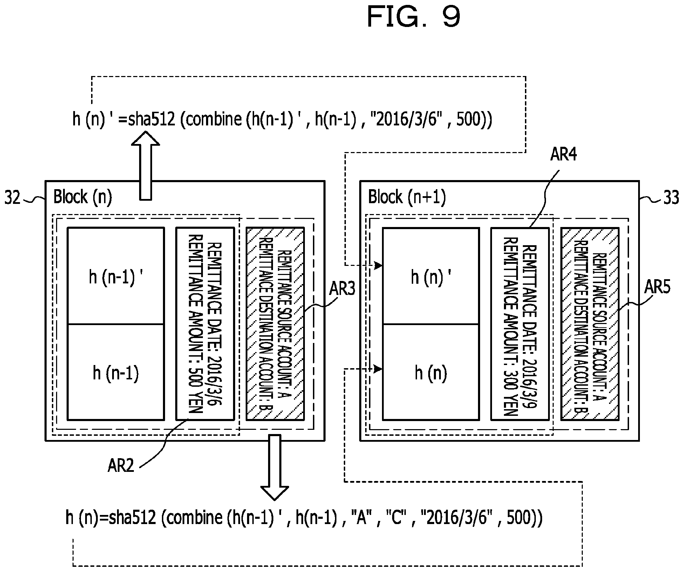

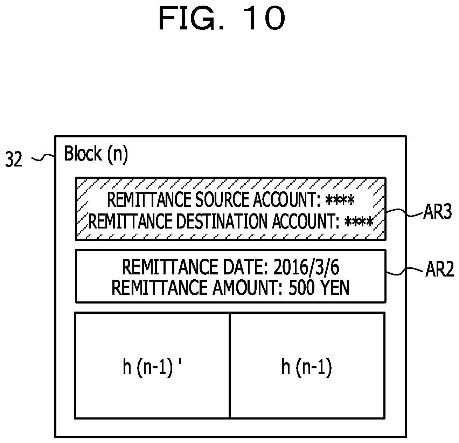

FIG. 8 is a flowchart illustrating an example of the block process. FIG. 9 is a diagram for explaining an example of generation of a new block. FIG. 10 is a diagram for explaining an example of changing data included in a block.

First, upon receiving a request in the processing of step S201 described above, the block generation unit MT1 determines whether or not the request is a data change request (step S301) as illustrated in FIG. 8. In a case where the request is not the data change request (NO in step S301), the block generation unit MT1 generates a hash h(n)' (step S302). In other words, in a case where the request is a data registration request, the block generation unit MT1 generates the hash h(n)'.

Specifically, as illustrated in FIG. 9, first, the block generation unit MT1 specifies an n-th block 32 arranged at the end of a blockchain. Next, the block generation unit MT1 extracts a hash h(n-1)', a hash h(n-1), and data of "2016/3/6" representing a remittance date and data of "500" representing a remittance amount stored in the change prohibition area AR2, from the specified block 32. Further, the block generation unit MT1 combines the hash h(n-1)', the hash h(n-1), and the two pieces of data of "2016/3/6" and "500" by using a function combine() which combines character strings, so as to generate a combined character string. The block generation unit MT1 then generates a hash h(n)' from the combined character string by using a function sha512 which is one of hash functions.

Referring back to FIG. 8, after the processing of step S302 is completed, the block generation unit MT1 generates a hash h(n) next (step S303). Specifically, as illustrated in FIG. 9, the block generation unit MT1 extracts the hash h(n-1)', the hash h(n-1), the data of "2016/3/6" representing the remittance date and the data of "500" representing the remittance amount stored in the change prohibition area AR2, and data of "A" representing a remittance source account and data of "C" representing a remittance destination account stored in the change permission area AR3, from the block 32. Further, the block generation unit MT1 combines the hash h(n-1)', the hash h(n-1), and the four pieces of data of "A", "C", "2016/3/6", and "500" by using the function combine() so as to generate a combined character string. Then, the block generation unit MT1 generates a hash h(n) from the combined character string by using the function sha512. Note that processing order of steps S302 and S303 may be reversed.

Referring back to FIG. 8, after the processing of step S303 is completed, the block generation unit MT1 adds the hash h(n)' and the hash h(n) to an (n+1)-th block next (step S304). Specifically, as illustrated in FIG. 9, the block generation unit MT1 generates an (n+1)-th block 33 to be coupled to the n-th block 32 arranged at the end of the blockchain, and adds the hash h(n)' and the hash h (n) to the (n+1)-th block 33. Although the generated (n+1)-th block 33 includes the change prohibition area AR4 and the change permission area AR5 in advance, data of the data registration request data is not yet stored in both of the change prohibition area AR4 and the change permission area AR5 immediately after the (n+1)-th block 33 is generated. In addition, the (n+1)-th block 33 may be generated, for example, between step S301 and step S302.

Referring back to FIG. 8, after the processing of step S304 is completed, the block generation unit MT1 divides the data next (step S305). More specifically, the block generation unit MT1 divides the data included in the data registration request into non-privacy data and privacy data. Note that the data registration request has information for dividing the data into non-privacy data and privacy data. The block generation unit MT1 divides the data based on the information.

After the processing of step S305 is completed, the block generation unit MT1 adds the non-privacy data to the change prohibition area AR4 next (step S306). For example, in a case where parts related to a data remittance date and a remittance amount among pieces of data of "A", "D", "2016/3/9", and "300" included in the data registration request correspond to the non-privacy data, the block generation unit MT1 adds the data of "2016/3/9" of the remittance date and the data of "300" of the remittance amount to the change prohibition area AR4 as illustrated in FIG. 9.

After the processing of step S306 is completed, the block generation unit MT1 adds the privacy data to the change permission area AR5 next (step S307). For example, in a case where parts related to a remittance source account and a remittance destination account among the pieces of data of "A", "D", "2016/3/9", and "300" included in the data registration request correspond to the privacy data, the block generation unit MT1 adds the data of "A" of the remittance source account and the data of "D" of the remittance destination account to the change permission area AR5 as illustrated in FIG. 9. After the processing of step S307 is completed, the block generation unit MT1 ends the process. Note that processing order of steps S306 and S307 may be reversed.

On the other hand, in a case where the request is a data change request (YES in step S301) in the processing of step S301, the block generation unit MT1 obtains a change target block (step S308). Since the data change request includes data to be changed, the block generation unit MT1 specifies a block including the data and obtains the specified block as the change target block, based on the data to be changed.

After the processing of step S308 is completed, the block generation unit MT1 changes data of the change permission area AR5 next (step S309). Since the data change request includes information for specifying data to be changed, the block generation unit MT1 specifies the data to be changed based on the information, and changes a part corresponding to privacy data (specifically, the remittance source account and the remittance destination account) to a specific symbol (for example, "*" or the like). Therefore, in a case where the block generation unit MT1 obtains the n-th block 32, data of the remittance source account and data of the remittance destination account of the change permission area AR5 of the block 32 are changed to specific symbols as illustrated in FIG. 10. Accordingly, the part related to privacy is concealed and the privacy is secured. After the processing of step S309 is completed, the block generation unit MT1 generates a hash of all of elements included in the block 32 including the changed data. The block generation unit MT1 adds the hash of some elements and the generated hash of all of the elements to the block 33, which is added next to the block 32 including the changed data. The block generation unit MT1 then ends the process.

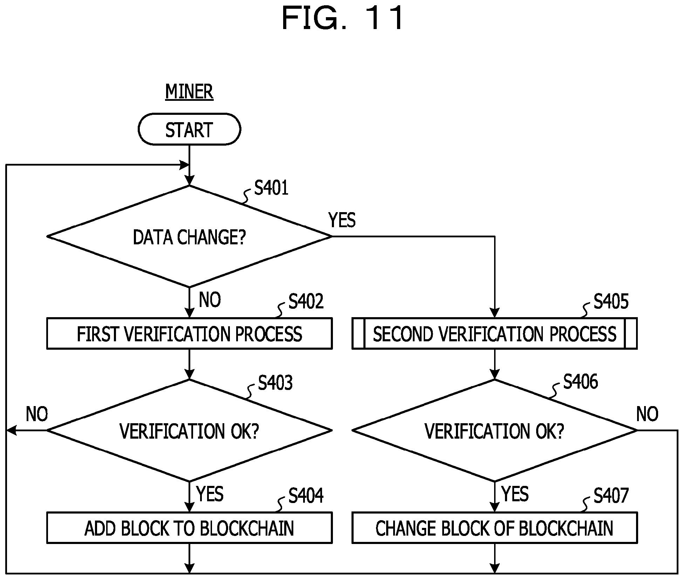

Next, an operation related to block verification and block updating performed by the miner 200 will be described with reference to FIG. 11. Since an operation of the miner 250 is basically the same as the operation of the miner 200, the description thereof will be omitted. FIG. 11 is a flowchart illustrating an example of the operation related to block verification and block updating performed by the miner 200.

After the block generation unit MT1 ends the process, the block verification unit MT2 determines whether or not a block to be verified is a block related to a data change (step S401). As described with reference to steps S204 and S205 in FIG. 7, while the block generation unit MT1 itself generates or changes a block, the block generation unit MT1 receives a block generated by the miner 250 or receives a block changed by the miner 250. The block verification unit MT2 specifies a processing step of a block input from the block generation unit MT1, and determines whether or not the block to be verified is a block related to a data change.

In a case where the block to be verified is not a block related to a data change (NO in step S401), the block verification unit MT2 executes a first verification process (step S402). The first verification process is a process of verifying validity of the generated block. Specifically, the first verification process is performed by checking whether or not a hash calculated from a block chained immediately before the block to be verified coincides with a hash, recorded in the block to be verified, of the block chained immediately before the block to be verified.

After the processing of step S402 is completed, the block verification unit MT2 determines whether or not the verification is OK next (step S403). That is, the block verification unit MT2 determines whether or not the verification is positive. For example, the block verification unit MT2 compares the hash calculated from the block chained immediately before the block to be verified with the hash, recorded in the block to be verified, of the block chained immediately before the block to be verified. In a case where the hashes coincide with each other, the block verification unit MT2 determines that the verification is OK. Conversely, in a case where the block verification unit MT2 compares the hash calculated from the block chained immediately before the block to be verified with the hash, recorded in the block to be verified, of the block chained immediately before the block to be verified and the hashes do not coincide with each other, the block verification unit MT2 determines that the verification is NG.

In a case where the verification is OK (YES in step S403), the block update unit MT3 adds the block to the blockchain (step S404), returns to the processing of step S401, and waits. On the other hand, in a case where the verification is NG (NO in step S403), the block update unit MT3 skips the processing of step S404, returns to the processing of step S401, and waits. Accordingly, a new block including data included in the data registration request is added at the end of the existing blockchain and the blockchain is updated to a new blockchain.

On the other hand, in a case where the block to be verified is a block related to a data change (YES in step S401), the block verification unit MT2 executes a second verification process (step S405). Specifically, in a case where a block to be verified is a block changed by the block generation unit MT1 or a block changed by the miner 250, the block verification unit MT2 executes the second verification process. That is, the second verification process is a process of verifying validity of the changed block. Note that details of the second verification process will be described later.

After the processing of step S405 is completed, the block verification unit MT2 determines whether or not verification is OK next (step S406). That is, the block verification unit MT2 determines whether or not the verification is positive. In a case where the verification is OK (YES in step S406), the block update unit MT3 changes a block of the blockchain (step S407), returns to the processing of step S401, and waits. Accordingly, the block including data before a change is updated to a block including the changed data. On the other hand, in a case where the verification is NG (NO in step S406), the block update unit MT3 skips the processing of step S407, returns to the processing of step S401, and waits.

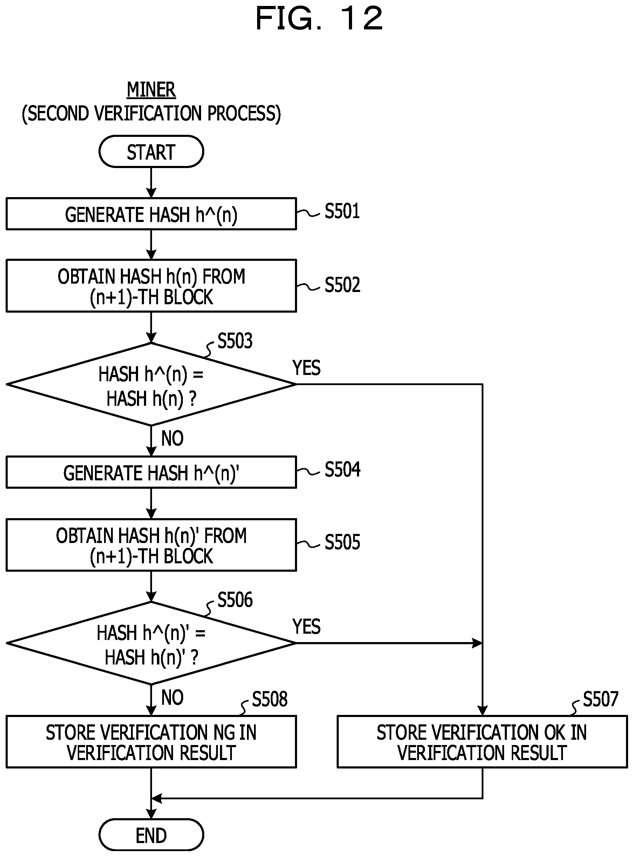

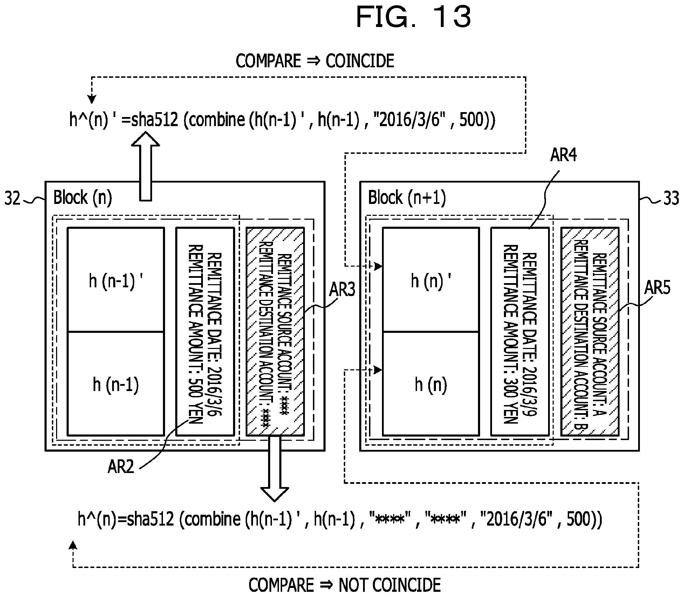

Next, the second verification process described above will be described with reference to FIGs. 12 and 13.

FIG. 12 is a flowchart illustrating an example of the second verification process. FIG. 13 is a diagram for explaining an example of verification of a block.

First, in a case where a block to be verified is a block related to a data change in the processing of step S401 described above, the block verification unit MT2 generates a hash h^(n) as illustrated in FIG. 12 (step S501). Specifically, as illustrated on the lower side of FIG. 13, first, the block verification unit MT2 specifies an n-th block 32 to be changed. Next, the block verification unit MT2 extracts a hash h(n-1)', a hash h(n-1), data of "2016/3/6" representing a remittance date and data of "500" representing a remittance amount stored in the change prohibition area AR2, and two pieces of changed data of "****" and "****" stored in the change permission area AR3, from the specified block 32. Further, the block verification unit MT2 combines the hash h(n-1)', the hash h(n-1), and the four pieces of data of "2016/3/6", "500", "****", and "****" by using the function combine() so as to generate a combined character string. The block verification unit MT2 then generates a hash h^(n) from the combined character string by using the function sha512.

After the processing of step S501 is completed, next, the block verification unit MT2 obtains a hash h(n) from an (n+1)-th block (step S502) and compares the hash h^(n) with the hash h(n) to determine whether or not the hashes coincide with each other (step S503). In the present embodiment, since the hash h^(n) is generated by using the changed data while the hash h(n) is generated by using the data before the change, the hash h^(n) and the hash h(n) differ from each other. For example, in a case where the data before the change and the data after the change coincide with each other, that is, in a case where the data is simply updated to the same data, the hash h^(n) and the hash h(n) coincide with each other.

In a case where the hash h^(n) and the hash h(n) do not coincide with each other (NO in step S503), the block verification unit MT2 generates a hash h^(n)' (step S504). Specifically, as illustrated on the upper side of FIG. 13, the block verification unit MT2 first specifies an n-th block 32 to be changed. Next, the block verification unit MT2 extracts a hash h(n-1)', a hash h(n-1), and data of "2016/3/6" representing a remittance date and data of "500" representing a remittance amount stored in the change prohibition area AR2, from the specified block 32. Further, the block verification unit MT2 combines the hash h(n-1)', the hash h(n-1), and the two pieces of data of "2016/3/6" and "500" by using the function combine() so as to generate a combined character string. The block verification unit MT2 generates a hash h^(n)' from the combined character string by using the function sha512.

After the processing of step S504 is completed, next, the block verification unit MT2 obtains a hash h(n)' from the (n+1)-th block (step S505) and compares the hash h^(n)' with the hash h(n)' to determine whether or not the hashes coincide with each other (step S506). In the present embodiment, since the hash h^(n)' is generated by using non-changed data, the hash h^(n)' and the hash h(n)' coincide with each other. For example, when data stored in the change prohibition area AR2 is changed by tampering or the like, the hash h^(n)' and the hash h(n)' differ from each other.

In a case where the hash h^(n)' coincides with the hash h(n)' (YES in step S506), the block verification unit MT2 determines that the data stored in the change prohibition area AR2 is not changed and stores verification OK in the verification result (step S507). Also in the case where the hash h^(n) and the hash h(n) coincide with each other (YES in step S503) in the processing of step S503 described above, the block verification unit MT2 executes the processing of step S507 in a similar manner. On the other hand, in a case where the hash h^(n)' and the hash h(n)' do not coincide with each other (NO in step S506), the block verification unit MT2 determines that the data stored in the change prohibition area AR2 is changed and stores verification NG in the verification result (step S508). Accordingly, the block verification unit MT2 may determine whether or not the verification is OK in the processing of subsequent step S406 (see FIG. 11).

As described above, according to the present embodiment, the miner 200 serving as a blockchain management device includes the block generation unit MT1, the block verification unit MT2, and the block update unit MT3. The block generation unit MT1 generates a hash h(n)' of data included in a part obtained by excluding the change permission area AR3 from the n-th block 32 including the change prohibition area AR2 and the change permission area AR3 and a hash h(n) of data included in the block 32. Further, the block generation unit MT1 adds the hash h(n)' and the hash h(n) to the (n+1)-th block 33, which is added next to the block 32 and includes the change prohibition area AR4 and the change permission area AR5. For example, the block generation unit MT1 adds the hash h(n)' and the hash h(n) to the (n+1)-th block 33, which is chained immediately after the block 32 and includes the change prohibition area AR4 and the change permission area AR5. The miner 200 manages the block 33 to which the hash h(n)' and the hash h(n) are added, so that a part of the data may be changed for a valid reason.

In addition, the block verification unit MT2 determines whether or not a hash h^(n) of data included in the block 32 coincides with a hash h(n) of data included in the block 33 which is added next to the block 32 and includes the change prohibition area AR4 and the change permission area AR5. For example, the block verification unit MT2 determines whether or not the hash h^(n) of the data included in the block 32 coincides with the hash h(n) of the data included in the block 33 which is chained immediately after the block 32 and includes the change prohibition area AR4 and the change permission area AR5. In addition, in a case where the hash h^(n) and the hash h(n) do not coincide with each other, the block verification unit MT2 generates a hash h^(n)' of data included in a part obtained by excluding the change permission area AR3 from the block 32 and obtains a hash h(n)' of data included in a part obtained by excluding the change permission area AR5 from the block 33. In a case where the hash h^(n)' and the hash h(n)' coincide with each other, the block verification unit MT2 determines that data stored in the change prohibition area AR4 of the block 32 is not changed. In a case where it is determined that the data stored in the change prohibition area AR4 of the block 32 is not changed, the block update unit MT3 changes the block 32 to a block in which data stored in the change permission area AR3 of the block 32 is changed. Accordingly, it possible to verify that the data stored in the change prohibition area AR2 is not changed.

Although the preferred embodiment of the present invention has been described in detail above, embodiments are not limited to the specific embodiment according to the present invention, and various modifications and changes may be made within the scope of the essence of the present invention described in the claims.

Specifically, although the embodiment in which two pieces of data are stored in one change prohibition area and two pieces of data are stored in one change permission area has been described in the present embodiment, embodiments are not limited particularly to such an embodiment. For example, one block may include a plurality of change prohibition areas and a plurality of change permission areas for respective pieces of data to be stored. In this case, a hash of all of elements of the block is generated and a hash of some of the elements obtained by excluding data stored in each of the plurality of change permission areas from all of the elements of the block is generated, so that it is possible to obtain the same effect as the effect of the present embodiment. For example, privacy importance may be associated with the plurality of change permission areas.

### Reference Signs List

S blockchain management system
100, 150 node (user)
WT wallet tool
WT1 request accepting unit
WT2 request transmission unit
200, 250 node (miner)
MT mining tool
MT1 block generation unit
MT2 block verification unit
MT3 block update unit

## Claims

1. A blockchain management method in which a process is executed by a computer, the process comprising:
generating (S302) a first hash of data included in a partial block obtained by excluding a second area from a first block of a blockchain, the first block including a first area in which a data change is prohibited and the second area in which the data change is permitted;
generating (S303) a second hash of data included in the first block; and
adding (S304) the first hash and the second hash to a second block of the blockchain, the second block being added next to the first block and includes a first area in which a data change is prohibited and a second area in which the data change is permitted.

2. The blockchain management method according to claim 1, further comprising:
a process of dividing (S305), in a case where a received request is a data registration request, data of the registration request into data of which change is prohibited and data of which change is permitted and storing the divided data in each of the first area and the second area of the second block.

3. The blockchain management method according to claim 1 or 2, further comprising:
a process of changing, in a case where a received request is a data change request, data stored in the second area of the first block to data of the change request.

4. The blockchain management method according to claim 1, further comprising:
generating (S501) a third hash of data included in the first block of the blockchain when verifying the first block;
determining (S503) whether or not the third hash coincides with the second hash included in the second block of the blockchain;
generating (S504), in a case where the third hash and the second hash do not coincide with each other, a fourth hash of data included in a first partial block obtained by excluding the second area from the first block ;
determining (S506) whether or not the first hash included in the second block of the blockchain coincides with the fourth hash; and
determining that data stored in the first area of the first block is not changed in a case where the first hash and the fourth hash coincide with each other.

5. The blockchain management method according to claim 1, further comprising:
a process of changing, in a case where it is determined that the data stored in the first area of the first block is not changed, the first block to a block in which data stored in the second area of the first block is changed.

6. A blockchain management device comprising:
a processing unit configured to execute a process, the process including
generating (S302) a first hash of data included in a partial block obtained by excluding a second area from a first block of a blockchain, the first block including a first area in which a data change is prohibited and the second area in which the data change is permitted,
generating (S303) a second hash of data included in the first block, and
adding (S304) the first hash and the second hash to a second block of the blockchain, the second block being added next to the first block and includes a first area in which a data change is prohibited and a second area in which the data change is permitted.

7. The blockchain management device according to claim 6,
wherein the processing unit divides (S305), in a case where a received request is a data registration request, data of the registration request into data of which change is prohibited and data of which change is permitted and stores the divided data in each of the first area and the second area of the second block.

8. The blockchain management device according to claim 6,
wherein the processing unit changes, in a case where a received request is a data change request, data stored in the second area of the first block to data of the change request.

9. The blockchain management device according to claim 6, wherein:
the process includes
generating (S501) a third hash of data included in the first block of the blockchain when verifying the first block;
determining (S503) whether or not the third hash coincides with the second hash included in the second block of the blockchain,
generating (S504), in a case where the third hash and the second hash do not coincide with each other, a fourth hash of data included in a first partial block obtained by excluding the second area from the first block,
determining (S506) whether or not the first hash included in the second block of the blockchain coincides with the fourth hash; and
determining that data stored in the first area of the first block is not changed in a case where the first hash and the fourth hash coincide with each other.

10. The blockchain management device according to claim 9,
wherein the processing unit changes, in a case where it is determined that the data stored in the first area of the first block is not changed, the first block to a block in which data stored in the second area of the first block is changed.

11. A blockchain management system including a plurality of nodes, the system comprising:
a first node that transmits a data registration request; and
a second node that generates (S302), in a case of receiving the registration request, a first hash of data included in a partial block obtained by excluding a second area from a first block of a blockchain, the first block including a first area in which a data change is prohibited and the second area in which the data change is permitted, generates (S303) a second hash of data included in the first block, adds (S304) the first hash and the second hash to a second block of the blockchain, the second block being added next to the first block and includes a first area in which a data change is prohibited and a second area in which the data change is permitted, and divides (S305) data of the registration request into data of which change is prohibited and data of which change is permitted and stores the divided data in each of the first area and the second area of the second block.

12. The blockchain management system according to claim 11, wherein the
second node that generates (S501) a third hash of data included in the first block of the blockchain when verifying the first block, determines (S503), whether or not the third hash coincides with the second hash included in the second block of the blockchain, generates (S504), in a case where the third hash and the second hash do not coincide with each other, a fourth hash of data included in a first partial block obtained by excluding the second area from the first block, determines (S506) whether or not the first hash included in the second block of the blockchain coincides with the fourth hash, determines that data stored in the first area of the first block is not changed in a case where the first hash and the fourth hash coincide with each other, and changes data stored in the second area of the first block to data of the change request.

## Patentansprüche

1. Verfahren zur Blockchain-Verwaltung, bei dem ein Prozess von einem Computer ausgeführt wird, wobei der Prozess umfasst:
Generieren (S302) eines ersten Hashs von Daten, die in einem Teilblock enthalten sind, der durch Ausschließen eines zweiten Bereichs aus einem ersten Block einer Blockchain erhalten wird, wobei der erste Block einen ersten Bereich, in dem eine Datenänderung verboten ist, und den zweiten Bereich, in dem die Datenänderung erlaubt ist, aufweist;
Generieren (S303) eines zweiten Hashs von Daten, die in dem ersten Block enthalten sind; und
Hinzufügen (S304) des ersten Hashs und des zweiten Hashs zu einem zweiten Block der Blockchain, wobei der zweite Block neben dem ersten Block hinzugefügt wird und einen ersten Bereich, in dem eine Datenänderung verboten ist, und einen zweiten Bereich, in dem sich die Datenänderung erlaubt ist, aufweist.

2. Verfahren zur Blockchain-Verwaltung nach Anspruch 1, ferner umfassend:
einen Prozess des Aufteilens (S305), in einem Fall, in dem eine empfangene Anfrage eine Datenregistrierungsanfrage ist, von Daten der Registrierungsanfrage in Daten, deren Änderung verboten ist, und Daten, deren Änderung erlaubt ist, und Speicherns der aufgeteilten Daten in jedem von dem ersten Bereich und dem zweiten Bereich des zweiten Blocks.

3. Verfahren zur Blockchain-Verwaltung nach Anspruch 1 oder 2, ferner umfassend:
einen Prozess des Änderns, in einem Fall, in dem eine empfangene Anfrage eine Datenänderungsanfrage ist, von Daten, die in dem zweiten Bereich des ersten Blocks gespeichert sind, in Daten der Änderungsanfrage.

4. Verfahren zur Blockchain-Verwaltung nach Anspruch 1, ferner umfassend:
Generieren (S501) eines dritten Hashs von Daten, die in dem ersten Block der Blockchain enthalten sind, wenn der erste Block verifiziert wird;
Bestimmen (S503), ob der dritte Hash mit dem zweiten Hash, der in dem zweiten Block der Blockchain enthalten ist, übereinstimmt;
Generieren (S504), in einem Fall, in dem der dritte Hash und der zweite Hash nicht miteinander übereinstimmen, eines vierten Hash von Daten, die in einem ersten Teilblock enthalten sind, der durch Ausschließen des zweiten Bereichs aus dem ersten Block erhalten wird;
Bestimmen (S506), ob der in dem zweiten Block der Blockchain enthaltene erste Hash mit dem vierten Hash übereinstimmt oder nicht; und
Bestimmen, dass Daten, die in dem ersten Bereich des ersten Blocks gespeichert sind, nicht geändert sind, in einem Fall, in dem der erste Hash und der vierte Hash miteinander übereinstimmen.

5. Verfahren zur Blockchain-Verwaltung nach Anspruch 1, ferner umfassend:
einen Prozess des Ändern, in einem Fall, in dem bestimmt wird, dass die Daten, die in dem ersten Bereich des ersten Blocks gespeichert sind, nicht geändert sind, des ersten Blocks in einen Block, in dem Daten, die im zweiten Bereich des ersten Blocks gespeichert sind, geändert sind.

6. Vorrichtung zur Blockchain-Verwaltung, umfassend:
eine Verarbeitungseinheit, die dazu ausgelegt ist, einen Prozess auszuführen, wobei der Prozess aufweist:
Generieren (S302) eines ersten Hashs von Daten, die in einem Teilblock enthalten sind, der durch Ausschließen eines zweiten Bereichs aus einem ersten Block einer Blockchain erhalten wird, wobei der erste Block einen ersten Bereich, in dem eine Datenänderung verboten ist, und den zweiten Bereich, in dem die Datenänderung erlaubt ist, aufweist,
Generieren (S303) eines zweiten Hashs von Daten, die in dem ersten Block enthalten sind, und
Hinzufügen (S304) des ersten Hashs und des zweiten Hashs zu einem zweiten Block der Blockchain, wobei der zweite Block neben dem ersten Block hinzugefügt wird und einen ersten Bereich, in dem eine Datenänderung verboten ist, und einen zweiten Bereich, in dem die Datenänderung erlaubt ist, aufweist.

7. Vorrichtung zur Blockchain-Verwaltung nach Anspruch 6,
wobei die Verarbeitungseinheit, in einem Fall, in dem eine empfangene Anfrage eine Datenregistrierungsanfrage ist, Daten der Registrierungsanfrage in Daten, deren Änderung verboten ist, und Daten, deren Änderung erlaubt ist, aufteilt (S305), und die aufgeteilten Daten in jedem von dem ersten Bereich und dem zweiten Bereich des zweiten Blocks speichert.

8. Vorrichtung zur Blockchain-Verwaltung nach Anspruch 6,
wobei die Verarbeitungseinheit, in einem Fall, in dem eine empfangene Anfrage eine Datenänderungsanfrage ist, Daten, die in dem zweiten Bereich des ersten Blocks gespeichert sind, in Daten der Änderungsanfrage ändert.

9. Vorrichtung zur Blockchain-Verwaltung nach Anspruch 6, wobei: der Prozess aufweist:
Generieren (S501) eines dritten Hashs von Daten, die in dem ersten Block der Blockchain enthalten sind, wenn der erste Block verifiziert wird;
Bestimmen (S503), ob der dritte Hash mit dem zweiten Hash, der in dem zweiten Block der Blockchain enthalten ist, übereinstimmt,
Generieren (S504), in einem Fall, in dem der dritte Hash und der zweite Hash nicht miteinander übereinstimmen, eines vierten Hashs von Daten, die in einem ersten Teilblock enthalten sind, der durch Ausschließen des zweiten Bereichs aus dem ersten Block erhalten wird,
Bestimmen (S506), ob der in dem zweiten Block der Blockchain enthaltene erste Hash mit dem vierten Hash übereinstimmt oder nicht; und
Bestimmen, dass Daten, die in dem ersten Bereich des ersten Blocks gespeichert sind, nicht geändert sind, in einem Fall, in dem der erste Hash und der vierte Hash miteinander übereinstimmen.

10. Vorrichtung zur Blockchain-Verwaltung nach Anspruch 9,
wobei die Verarbeitungseinheit, in einem Fall, in dem bestimmt wird, dass die Daten, die in dem ersten Bereich des ersten Blocks gespeichert sind, nicht geändert sind, den ersten Block in einen Block ändert, in dem Daten, die im zweiten Bereich des ersten Blocks gespeichert sind, geändert sind.

11. System zur Blockchain-Verwaltung, das eine Vielzahl von Knoten aufweist, wobei das System umfasst:
einen ersten Knoten, der eine Datenregistrierungsanfrage sendet; und
einen zweiten Knoten, der in einem Fall des Empfangens der Registrierungsanfrage, einen ersten Hash von Daten generiert (S302), die in einem Teilblock enthalten sind, der durch Ausschließen eines zweiten Bereichs aus einem ersten Block einer Blockchain erhalten wird, wobei der erste Block einen ersten Bereich, in dem eine Datenänderung verboten ist, und den zweiten Bereich, in dem die Datenänderung erlaubt ist, aufweist, einen zweiten Hash von Daten generiert (S303), die in dem ersten Block enthalten sind, den ersten Hash und den zweiten Hash zu einem zweiten Block der Blockchain hinzufügt (S304), wobei der zweite Block neben dem ersten Block hinzugefügt wird und einen ersten Bereich, in dem eine Datenänderung verboten ist, und einen zweiten Bereich, in dem die Datenänderung erlaubt ist, aufweist, und Daten der Registrierungsanfrage in Daten, deren Änderung verboten ist, und Daten, deren Änderung erlaubt ist, aufteilt (5305), und die aufgeteilten Daten in jedem von dem ersten Bereich und dem zweiten Bereichs des zweiten Blocks speichert.

12. System zur Blockchain-Verwaltung nach Anspruch 11, wobei der zweite Knoten, der einen dritten Hash von in dem ersten Block der Blockchain enthaltenen Daten generiert (S501), wenn der erste Block verifiziert wird, bestimmt (S503), ob der dritte Hash mit dem zweiten Hash, der in dem zweiten Block der Blockchain enthalten ist, übereinstimmt oder nicht, in einem Fall, in dem der dritte Hash und der zweite Hash nicht miteinander übereinstimmen, einen vierten Hash von Daten generiert (S504), die in einem ersten Teilblock enthalten sind, der durch Ausschließen des zweiten Bereich aus dem ersten Block erhalten wird, bestimmt (S506), ob der in dem zweiten Block der Blockchain enthaltene erste Hash mit dem vierten Hash übereinstimmt oder nicht, bestimmt, dass Daten, die in dem ersten Bereich des ersten Blocks gespeichert sind, nicht geändert sind, in einem Fall, in dem der erste Hash und der vierte Hash miteinander übereinstimmen, und Daten, die in dem zweiten Bereich des ersten Blocks gespeichert sind, in Daten der Änderungsanfrage ändert.

## Revendications

1. Un procédé de gestion de blockchain dans lequel un procédé est exécuté par un ordinateur, le procédé comprenant :
la génération (S302) d'un premier hachage de données incluses dans un bloc partiel obtenu en excluant une deuxième zone d'un premier bloc d'une blockchain, le premier bloc comprenant une première zone dans laquelle une modification de données est interdite et la deuxième zone dans laquelle la modification de données est autorisée ;
la génération (S303) d'un deuxième hachage de données incluses dans le premier bloc ; et
l'ajout (S304) du premier hachage et du deuxième hachage à un deuxième bloc de la blockchain, le deuxième bloc étant ajouté à côté du premier bloc et comprenant une première zone dans laquelle une modification de données est interdite et une deuxième zone dans laquelle la modification de données est autorisée.

2. Le procédé de gestion de blockchain selon la revendication 1, comprenant en outre :
un procédé de division (S305), dans un cas où une demande reçue est une demande d'enregistrement de données, des données de la demande d'enregistrement en données dont la modification est interdite et en données dont la modification est autorisée et le stockage des données divisées dans chacune de la première zone et de la deuxième zone du deuxième bloc.

3. Le procédé de gestion de blockchain selon la revendication 1 ou 2, comprenant en outre :
un procédé de modification, dans un cas où une demande reçue est une demande de modification de données, des données stockées dans la deuxième zone du premier bloc en données de la demande de modification.

4. Le procédé de gestion de blockchain selon la revendication 1, comprenant en outre :
la génération (S501) d'un troisième hachage de données incluses dans le premier bloc de la blockchain lors de la vérification du premier bloc ;
déterminer (S503) si le troisième hachage coïncide ou non avec le deuxième hachage inclus dans le deuxième bloc de la blockchain ;
la génération (S504), dans un cas où le troisième hachage et le deuxième hachage ne coïncident pas l'un avec l'autre, d'un quatrième hachage de données incluses dans un premier bloc partiel obtenu en excluant la deuxième zone du premier bloc ;
déterminer (S506) si le premier hachage inclus dans le deuxième bloc de la blockchain coïncide ou non avec le quatrième hachage ; et
la détermination que les données stockées dans la première zone du premier bloc ne sont pas modifiées dans un cas où le premier hachage et le quatrième hachage coïncident l'un avec l'autre.

5. Le procédé de gestion de blockchain selon la revendication 1, comprenant en outre :
un procédé de modification, dans un cas où il est déterminé que les données stockées dans la première zone du premier bloc ne sont pas modifiées, du premier bloc en un bloc dans lequel les données stockées dans la deuxième zone du premier bloc sont modifiées.

6. Un dispositif de gestion de blockchain comprenant :
une unité de traitement configurée pour exécuter un procédé, le procédé comprenant
la génération (S302) d'un premier hachage de données incluses dans un bloc partiel obtenu en excluant une deuxième zone d'un premier bloc d'une blockchain, le premier bloc comprenant une première zone dans laquelle une modification de données est interdite et la deuxième zone dans laquelle la modification de données est autorisée,
la génération (S303) d'un deuxième hachage de données incluses dans le premier bloc, et
l'ajout (S304) du premier hachage et du deuxième hachage à un deuxième bloc de la blockchain, le deuxième bloc étant ajouté à côté du premier bloc et comprenant une première zone dans laquelle une modification de données est interdite et une deuxième zone dans laquelle la modification de données est autorisée.

7. Le dispositif de gestion de blockchain selon la revendication 6,
dans lequel l'unité de traitement divise (S305), dans un cas où une demande reçue est une demande d'enregistrement de données, les données de la demande d'enregistrement en données dont la modification est interdite et en données dont la modification est autorisée et stocke les données divisées dans chacune de la première zone et de la deuxième zone du deuxième bloc.

8. Le dispositif de gestion de blockchain selon la revendication 6,
dans lequel l'unité de traitement modifie, dans un cas où une demande reçue est une demande de modification de données, les données stockées dans la deuxième zone du premier bloc en données de la demande de modification.

9. Le dispositif de gestion de blockchain selon la revendication 6, dans lequel :
le procédé comprend
la génération (S501) d'un troisième hachage de données incluses dans le premier bloc de la blockchain lors de la vérification du premier bloc ;
déterminer (S503) si le troisième hachage coïncide ou non avec le deuxième hachage inclus dans le deuxième bloc de la blockchain,
la génération (S504), dans un cas où le troisième hachage et le deuxième hachage ne coïncident pas l'un avec l'autre, d'un quatrième hachage de données incluses dans un premier bloc partiel obtenu en excluant la deuxième zone du premier bloc,
déterminer (S506) si le premier hachage inclus dans le deuxième bloc de la blockchain coïncide ou non avec le quatrième hachage ; et
la détermination que les données stockées dans la première zone du premier bloc ne sont pas modifiées dans un cas où le premier hachage et le quatrième hachage coïncident l'un avec l'autre.

10. Le dispositif de gestion de blockchain selon la revendication 9,
dans lequel l'unité de traitement modifie, dans un cas où il est déterminé que les données stockées dans la première zone du premier bloc ne sont pas modifiées, le premier bloc en un bloc dans lequel les données stockées dans la deuxième zone du premier bloc sont modifiées.

11. Un système de gestion de blockchain comprenant une pluralité de nœuds, le système comprenant :
un premier nœud qui transmet une demande d'enregistrement de données ; et
un deuxième nœud qui génère (S302), dans un cas de réception de la demande d'enregistrement, un premier hachage de données incluses dans un bloc partiel obtenu en excluant une deuxième zone d'un premier bloc d'une blockchain, le premier bloc comprenant une première zone dans laquelle une modification de données est interdite et la deuxième zone dans laquelle la modification de données est autorisée, génère (S303) un deuxième hachage de données incluses dans le premier bloc, ajoute (S304) le premier hachage et le deuxième hachage à un deuxième bloc de la blockchain, le deuxième bloc étant ajouté à côté du premier bloc et comprenant une première zone dans laquelle une modification de données est interdite et une deuxième zone dans laquelle la modification de données est autorisée, et divise (S305) les données de la demande d'enregistrement en données dont la modification est interdite et en données dont la modification est autorisée et stocke les données divisées dans chacune de la première zone et de la deuxième zone du deuxième bloc.

12. Le système de gestion de blockchain selon la revendication 11, dans lequel le deuxième nœud qui génère (S501) un troisième hachage de données incluses dans le premier bloc de la blockchain lors de la vérification du premier bloc, détermine (S503), si oui ou non le troisième hachage coïncide avec le deuxième hachage inclus dans le deuxième bloc de la blockchain, génère (S504), dans un cas où le troisième hachage et le deuxième hachage ne coïncident pas l'un avec l'autre, un quatrième hachage de données incluses dans un premier bloc partiel obtenu en excluant la deuxième zone du premier bloc, détermine (S506) si le premier hachage inclus dans le deuxième bloc de la blockchain coïncide ou non avec le quatrième hachage, détermine que les données stockées dans la première zone du premier bloc ne sont pas modifiées dans un cas où le premier hachage et le quatrième hachage coïncident l'un avec l'autre, et modifie les données stockées dans la deuxième zone du premier bloc en données de la demande de modification.
